# DEMANDE DE BREVET EUROPEEN

(11) **EP 4 629 368 A1**
(43) Date de publication de la demande: **08.10.2025**
(21) Numéro de dépôt: 24305513.4
(22) Date de dépôt: 03.04.2024
(51) Int. Cl.: H01M 10/04, H01M 50/209

(54) **PROCÉDÉ D'ASSEMBLAGE D'UN MODULE POUR BATTERIE ÉLECTRIQUE METTANT EN OEUVRE DES MÂCHOIRES POUR COMPRIMER UN ENSEMBLE DE CELLULES ÉLECTROCHIMIQUES**

(71) Demandeur: Automotive Cells Company SE, 33520 Bruges (FR)
(72) Inventeur: FRESNEAU, Aymeric, 33400 Talence (FR); MARATHE, Dimitri, 33310 Lormont (FR); FAT-CHEUNG, Adrien, 33520 Bruges (FR)
(74) Mandataire: Lavoix

(57) **Abrégé**

Procédé d'assemblage d'un module pour batterie électrique comprenant les étapes suivantes :
- obtention d'un ensemble (12) et d'un élément de boîtier (20) définissant un logement (22), l'ensemble comprenant une pluralité de cellules (14) électrochimiques et des séparateurs (15) successifs selon une direction longitudinale (L),
- application d'efforts longitudinaux (F) par deux mâchoires (46, 48) d'un dispositif de compression (44) pour comprimer l'ensemble dans une première configuration contractée,
- déplacement (D1) du dispositif de compression pour placer au moins une partie de l'ensemble dans le logement,
- écartement des mâchoires, l'ensemble passant de la première configuration contractée à une deuxième configuration contractée, dans laquelle l'ensemble reçoit des efforts de compression longitudinaux de l'élément de boîtier, et étant libéré dispositif de compression,
- déplacement du dispositif de compression à l'écart de l'élément de boîtier et de l'ensemble,
- installation d'une pluralité de connecteurs électriques entre au moins certaines des cellules.

## Description

La présente invention concerne un procédé d'assemblage d'un module pour batterie électrique.

L'invention concerne également un module susceptible d'être obtenu par un tel procédé.

L'invention s'applique en particulier à la réalisation d'un module de batterie pour véhicule électrique ou hybride.

Un tel module comprend une pluralité de cellules électrochimiques reliées électriquement les unes aux autres.

Chaque cellule est constituée d'un empilement d'éléments électrochimiques connu sous le terme anglais de « stack ». L'empilement comprend notamment des électrodes positives et des électrodes négatives formant des feuillets séparés par une couche de séparation.

Selon un exemple particulier, les cellules sont regroupées pour former un ou plusieurs ensembles, chacun comportant des cellules alignées les unes par rapport aux autres dans une direction. Afin de retenir les cellules dans chacun des ensembles, et de résister aux efforts dus au gonflement des cellules lors de l'utilisation de la batterie (en anglais « swelling »), il est connu de ceindre chacun des ensembles par des plaques de maintien métalliques soudées entre elles latéralement autour des cellules. Puis des connecteurs électriques sont installés entre les cellules.

Toutefois, afin de mettre en place les plaques de maintien, le ou les ensembles de cellules doivent être immobilisés sous compression pour permettre le soudage des plaques de maintien. Ces opérations sont assez complexes et prennent un certain temps.

Un but de l'invention est donc de fournir un procédé d'assemblage d'un module moins coûteux, tout en assurant une bonne tenue mécanique des cellules dans le module, le module étant avantageusement étanche.

A cet effet, l'invention a pour objet un procédé d'assemblage d'un module pour batterie électrique comprenant les étapes suivantes :
- obtention d'un ensemble et d'un élément de boîtier définissant un logement, l'ensemble comprenant une pluralité de cellules électrochimiques et des séparateurs, les cellules et les séparateurs étant successifs selon une direction longitudinale, l'ensemble ayant une face avant et une face arrière opposées l'une à l'autre longitudinalement,
- à l'aide d'un dispositif de compression ayant au moins deux mâchoires, application d'efforts longitudinaux sur la face avant et la face arrière respectivement par les deux mâchoires pour comprimer l'ensemble longitudinalement, les deux mâchoires étant dans une position relative rapprochée l'une par rapport à l'autre, dans laquelle l'ensemble est dans une première configuration contractée dans la direction longitudinale et est solidaire mécaniquement du dispositif de compression, le dispositif de compression étant dans une première position par rapport à l'élément de boîtier, dans laquelle l'ensemble est à l'écart de l'élément de boîtier,
- premier déplacement relatif du dispositif de compression par rapport à l'élément de boîtier de la première position vers une deuxième position dans laquelle au moins une partie de l'ensemble s'étend longitudinalement dans le logement,
- déplacement des deux mâchoires de la position relative rapprochée à une position relative moins rapprochée, l'ensemble passant de la première configuration contractée à une deuxième configuration contractée, dans laquelle la face avant et la face arrière reçoivent des efforts de compression longitudinaux de la part de l'élément de boîtier, l'ensemble devenant libre mécaniquement par rapport au dispositif de compression,
- deuxième déplacement relatif du dispositif de compression par rapport à l'élément de boîtier de la deuxième position vers une troisième position, dans laquelle le dispositif de compression est à l'écart de l'élément de boîtier et de l'ensemble, et
- installation d'une pluralité de connecteurs électriques entre au moins certaines des cellules.

Selon des modes particuliers de réalisation, le procédé comprend l'une ou plusieurs des caractéristiques suivantes, prise(s) isolément ou selon toutes les combinaisons techniquement possibles :
- le dispositif de compression comprend un corps s'étendant longitudinalement, l'une des deux mâchoires étant fixée sur le corps et formant une première protubérance par rapport au corps dans une première direction transversale perpendiculaire à la direction longitudinale, l'autre des deux mâchoires étant montée mobile longitudinalement sur le corps, et formant une deuxième protubérance par rapport au corps dans la première direction transversale ;
- le premier déplacement relatif est réalisé selon la première direction transversale, l'élément de boîtier comprenant des parois latérales entourant l'ensemble dans la deuxième position autour de la première direction transversale ;
- deux des parois latérales opposées l'une à l'autre longitudinalement définissent respectivement un logement avant et un logement arrière, respectivement avec la face avant et la face arrière de l'ensemble dans la troisième position ;
- les deux mâchoires s'étendent au moins en partie respectivement dans le logement avant et dans le logement arrière dans la deuxième position ;
- le procédé comprend une pose d'un couvercle sur l'élément de boîtier, au moins une partie de l'ensemble s'étendant longitudinalement dans le logement défini par l'élément de boîtier, le couvercle fermant au moins en partie le logement, le couvercle comprenant une protubérance s'étendant dans le logement avant ou le logement arrière ;
- le procédé comprend une pose d'un organe dans l'autre du logement avant et du logement arrière ;
- le module est étanche ;
- l'élément de boîtier comprend un fond, les connecteurs électriques étant installés sur des faces des cellules opposées au fond selon la première direction transversale ; et
- le premier déplacement relatif est réalisé selon une deuxième direction transversale perpendiculaire à la première direction transversale et la direction longitudinale, l'élément de boîtier comprenant des parois latérales entourant l'ensemble dans la deuxième position autour de la deuxième direction transversale.

L'invention a aussi pour objet un module pour batterie électrique susceptible d'être obtenu par un procédé tel que décrit ci-dessus, le module comprenant :
- un ensemble comprenant une pluralité de cellules électrochimiques et de séparateurs, les cellules et les séparateurs étant successifs selon la direction longitudinale, l'ensemble ayant une face avant et une face arrière opposées l'une à l'autre longitudinalement,
- un élément de boîtier définissant un logement, au moins une partie de l'ensemble s'étendant longitudinalement dans le logement, l'ensemble étant dans la deuxième configuration contractée, la face avant et la face arrière recevant des efforts de compression longitudinaux de la part de l'élément de boîtier, et
- une pluralité de connecteurs électriques connectant électriquement au moins certaines des cellules entre elles.

L'invention sera mieux comprise à la lecture de la description qui va suivre, donnée uniquement à titre d'exemple et faite en se référant aux dessins annexés, sur lesquels :

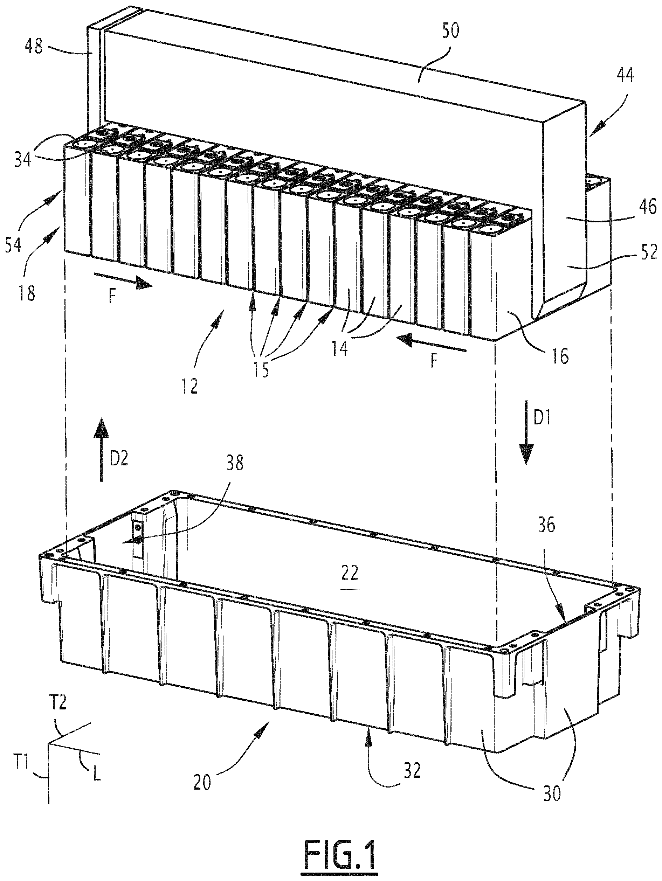

- la figure 1 est une vue en perspective du dispositif de compression, de l'ensemble et de l'élément de boîtier au cours d'un procédé selon l'invention, le dispositif de compression étant dans la première position et appliquant des efforts longitudinaux sur la face avant et la face arrière de l'ensemble, l'ensemble étant dans la première configuration contractée et solidaire mécaniquement du dispositif de compression, et

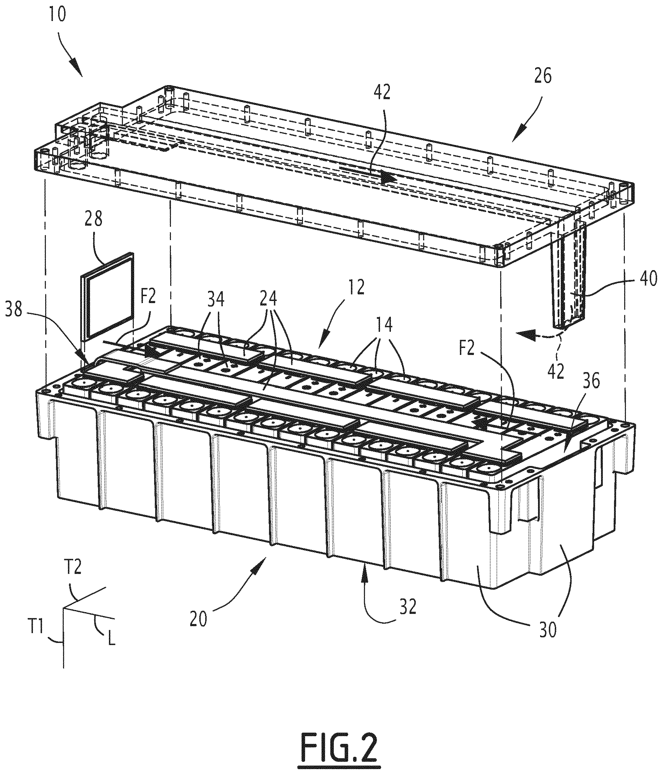

- la figure 2 est une vue en perspective, éclatée, d'un module selon l'invention, comprenant l'ensemble et l'élément de boîtier représentés sur la figure 1, l'ensemble étant dans la deuxième configuration contractée.

En référence aux figures 1 et 2, on décrit un module 10 pour batterie électrique selon l'invention. Le module 10 peut lui-même être considéré comme une batterie, puisqu'il est capable de stocker et fournir de l'énergie électrique.

La module 10 comprend un ensemble 12 comprenant une pluralité de cellules 14 électrochimiques et des séparateurs 15, les cellules et les séparateurs étant successifs selon une direction longitudinale L, l'ensemble ayant une face avant 16 et une face arrière 18 opposées l'une à l'autre longitudinalement.

Le module 10 comprend un élément de boîtier 20 définissant un logement 22, au moins une partie de l'ensemble 12 s'étendant longitudinalement dans le logement, l'ensemble étant dans une configuration contractée, la face avant 16 et la face arrière 18 recevant des efforts de compression longitudinaux F2 (figure 2) de la part de l'élément de boîtier 20.

Le module 10 comprend une pluralité de connecteurs électriques 24 (figure 2) connectant au moins certaines des cellules 14 entre elles.

Dans l'exemple, le module 10 comprend aussi un couvercle 26, et un organe 28, par exemple assurant une connexion électrique ou contrôlant ou monitorant l'état électrique des cellules 14 (en anglais : *cell module controller* ou CMC).

Les cellules 14 sont par exemple de forme prismatique, notamment parallélépipédique.

Les séparateurs 15 sont avantageusement intercalés entre les cellules 14. Les séparateurs 15 sont avantageusement adaptés, en cas de compression selon la direction L, pour créer un effort antagoniste à la compression.

Dans l'exemple, l'élément de boîtier 20 forme une bassine. L'élément de boîtier 20 comprend des parois latérales 30 entourant l'ensemble 12 autour d'une première direction transversale T1 perpendiculaire à la direction longitudinale L. L'élément de boîtier 20 comprend par exemple un fond 32, les connecteurs électriques 24 étant installés sur des faces 34 des cellules 14 opposées au fond selon la première direction transversale T1.

On définit également une deuxième direction transversale T2 perpendiculaire à la première direction transversale T1 et la direction longitudinale L.

Avantageusement, deux des parois latérales 30 opposées l'une à l'autre longitudinalement définissent respectivement un logement 36 avant et un logement arrière 38, respectivement avec la face avant 16 et la face arrière 18 de l'ensemble 12.

Par exemple, le couvercle 26 est adapté pour fermer au moins en partie, de préférence complètement et de manière étanche, le logement 22, pour obtenir un boîtier complet (caisson). Le couvercle 26 comprend avantageusement une protubérance 40 s'étendant dans l'un ou l'autre du logement avant 36 et du logement arrière 38. Ainsi, le module 10 est avantageusement étanche, au sens où l'élément de boîtier 20 est étanche, et le couvercle 26 est scellé hermétiquement sur l'élément de boîtier 20.

La protubérance 40 sert par exemple à véhiculer un fluide de refroidissement 42 depuis l'intérieur du couvercle 26 vers le logement 22.

L'organe 28 s'étend par exemple dans l'autre du logement avant 36 et du logement arrière 38.

Selon une variante non représentée, l'élément de boîtier 20 comprend des parois latérales entourant l'ensemble 12 autour de la deuxième direction transversale T2. L'élément de boîtier 20 forme alors par exemple un demi-caisson, un second élément de boîtier (non représenté) coopérant avec l'élément de boîtier 20 pour former un caisson complet.

En référence à la figure 1, on va maintenant décrire un dispositif de compression 44 (figure 1) adapté pour mettre en oeuvre certaines étapes d'un procédé selon l'invention.

Le dispositif de compression 44 a deux mâchoires 46, 48 adaptées pour appliquer des efforts longitudinaux F (figure 1) sur la face avant 16 et la face arrière 18.

Le dispositif de compression 44 comprend par exemple un corps 50 s'étendant longitudinalement, l'une des deux mâchoires 46, 48 étant par exemple fixée sur le corps et formant une première protubérance 52 par rapport au corps 50 dans la première direction transversale T1, l'autre des deux mâchoires étant montée mobile longitudinalement sur le corps 50, et formant une deuxième protubérance 54 par rapport au corps 50 dans la première direction transversale T1.

En variante (non représentée), les deux mâchoires 46, 48 sont montées mobiles sur le corps 50.

Les deux mâchoires 46, 48 sont mobiles entre une position relative rapprochée l'une par rapport à l'autre (figure 1), et une position relative moins rapprochée (non représentée mais se déduisant de la figure 1 en écartant les mâchoires 46, 48 l'une de l'autre longitudinalement).

En référence aux figures 1 et 2, on va maintenant décrire un procédé selon l'invention permettant d'assembler le module 10 à l'aide du dispositif de compression 44.

Tout d'abord, l'ensemble 12 et l'élément de boîtier 20 sont obtenus.

Puis, l'aide d'un dispositif de compression 44, les efforts longitudinaux F (figure 1) sont appliqués sur la face avant 16 et la face arrière 18 respectivement par les deux mâchoires 46, 48 pour comprimer l'ensemble 12 longitudinalement. Les deux mâchoires 46, 48 sont dans la position relative rapprochée l'une par rapport à l'autre (figure 1).

L'ensemble 12 est dans une première configuration contractée dans la direction longitudinale L et est solidaire mécaniquement du dispositif de compression 44. Le dispositif de compression 44 est dans une première position par rapport l'élément de boîtier 20, dans laquelle l'ensemble 12 est à l'écart de l'élément de boîtier 20.

Puis le dispositif de compression 44 est déplacé (flèche D1) par des moyens non représentés et connus en eux-mêmes, par rapport à l'élément de boîtier, de la première position vers une deuxième position (non représentée, mais qui se déduit de la première position sur la figure 1), dans laquelle au moins une partie de l'ensemble 12 s'étend longitudinalement dans le logement 22.

Dans l'exemple, l'ensemble 12 est intégralement reçu dans le caisson formé par l'élément de boîtier 20.

Toujours dans l'exemple, le déplacement relatif D1 du dispositif de compression 44 est réalisé selon la première direction transversale T1.

Selon une variante non représentée, le déplacement relatif D1 est réalisé selon la deuxième direction transversale T2.

Avantageusement, les deux mâchoires 46, 48 s'étendent au moins en partie respectivement dans le logement avant 36 et dans le logement arrière 38 dans la deuxième position.

Les mâchoires 46, 48 sont alors déplacées de la position relative rapprochée à la position relative moins rapprochée, l'ensemble 12 passant de la première configuration contractée à une deuxième configuration contractée (figure 2), dans laquelle la face avant 16 et la face arrière 18 reçoivent les efforts de compression longitudinaux F2 de la part de l'élément de boîtier 20. L'ensemble 12 devient libre mécaniquement par rapport au dispositif de compression 44.

Les efforts de compression F sont supérieurs en intensité aux efforts de compression F2. Dit autrement, les efforts F peuvent être considérés comme une « surcompression » par rapport aux efforts F2.

Le dispositif de compression 44 est ensuite déplacé (flèche D2) par rapport à l'élément de boîtier 20 de la deuxième position vers une troisième position (par exemple celle occupée sur la figure 1), dans laquelle le dispositif de compression 44 est à nouveau à l'écart de l'élément de boîtier 20 et de l'ensemble 12.

Enfin, la pluralité de connecteurs électriques 24 est installée entre au moins certaines des cellules 14, par exemple sur les faces 34 des cellules 14 opposées au fond 32 selon la première direction transversale T1. L'ensemble 12 est avantageusement dans la deuxième configuration contractée lorsque les connecteurs électriques 24 sont installés.

Dans l'exemple, l'organe 28 est placé dans le logement arrière 38. Le couvercle 26 est posé, la protubérance 40 étant située dans le logement avant 38.

Grâces aux caractéristiques décrites ci-dessus, le procédé d'assemblage assure une bonne tenue mécanique des cellules 14 dans le module 10. L'assemblage est facilité, et le procédé est moins coûteux.

## Revendications

1. Procédé d'assemblage d'un module (10) pour batterie électrique comprenant les étapes suivantes :
- obtention d'un ensemble (12) et d'un élément de boîtier (20) définissant un logement (22), l'ensemble (12) comprenant une pluralité de cellules (14) électrochimiques et des séparateurs (15), les cellules (14) et les séparateurs (15) étant successifs selon une direction longitudinale (L), l'ensemble (12) ayant une face avant (16) et une face arrière (18) opposées l'une à l'autre longitudinalement,
- à l'aide d'un dispositif de compression (44) ayant au moins deux mâchoires (46, 48), application d'efforts longitudinaux (F) sur la face avant (16) et la face arrière (18) respectivement par les deux mâchoires (46, 48) pour comprimer l'ensemble (12) longitudinalement, les deux mâchoires (46, 48) étant dans une position relative rapprochée l'une par rapport à l'autre, dans laquelle l'ensemble (12) est dans une première configuration contractée dans la direction longitudinale (L) et est solidaire mécaniquement du dispositif de compression (44), le dispositif de compression (44) étant dans une première position par rapport à l'élément de boîtier (20), dans laquelle l'ensemble (12) est à l'écart de l'élément de boîtier (20),
- premier déplacement (D1) relatif du dispositif de compression (44) par rapport à l'élément de boîtier (20) de la première position vers une deuxième position dans laquelle au moins une partie de l'ensemble (12) s'étend longitudinalement dans le logement (22),
- déplacement des deux mâchoires (46, 48) de la position relative rapprochée à une position relative moins rapprochée, l'ensemble (12) passant de la première configuration contractée à une deuxième configuration contractée, dans laquelle la face avant (16) et la face arrière (18) reçoivent des efforts de compression longitudinaux (F2) de la part de l'élément de boîtier (20), l'ensemble (12) devenant libre mécaniquement par rapport au dispositif de compression (44),
- deuxième déplacement relatif (D2) du dispositif de compression (44) par rapport à l'élément de boîtier (20) de la deuxième position vers une troisième position, dans laquelle le dispositif de compression (44) est à l'écart de l'élément de boîtier (20) et de l'ensemble (12), et
- installation d'une pluralité de connecteurs électriques (24) entre au moins certaines des cellules (14).

2. Procédé selon la revendication 1, dans lequel le dispositif de compression (44) comprend un corps (50) s'étendant longitudinalement, l'une des deux mâchoires (46, 48) étant fixée sur le corps (50) et formant une première protubérance (52) par rapport au corps (50) dans une première direction transversale (T1) perpendiculaire à la direction longitudinale (L), l'autre des deux mâchoires (46, 48) étant montée mobile longitudinalement sur le corps (50), et formant une deuxième protubérance (54) par rapport au corps (50) dans la première direction transversale (T1).

3. Procédé selon la revendication 2, dans lequel le premier déplacement relatif (D1) est réalisé selon la première direction transversale (T1), l'élément de boîtier (20) comprenant des parois latérales (30) entourant l'ensemble (12) dans la deuxième position autour de la première direction transversale (T1).

4. Procédé selon la revendication 3, dans lequel deux des parois latérales (30) opposées l'une à l'autre longitudinalement définissent respectivement un logement avant (36) et un logement arrière (38), respectivement avec la face avant (16) et la face arrière (18) de l'ensemble (12) dans la troisième position.

5. Procédé selon la revendication 4, dans lequel les deux mâchoires (46, 48) s'étendent au moins en partie respectivement dans le logement avant (36) et dans le logement arrière (38) dans la deuxième position.

6. Procédé selon la revendication 4 ou 5, comprenant une pose d'un couvercle (26) sur l'élément de boîtier (20), au moins une partie de l'ensemble (12) s'étendant longitudinalement dans le logement (22) défini par l'élément de boîtier (20), le couvercle (26) fermant au moins en partie le logement (22), le couvercle (26) comprenant une protubérance (40) s'étendant dans le logement avant (36) ou le logement arrière (38).

7. Procédé selon la revendication 6, comprenant une pose d'un organe (28) dans l'autre du logement avant (36) et du logement arrière (38).

8. Procédé selon l'une quelconque des revendications 1 à 7, dans lequel le module (10) est étanche.

9. Procédé selon l'une quelconque des revendications 3 à 7, dans lequel l'élément de boîtier (20) comprend un fond (32), les connecteurs électriques (24) étant installés sur des faces (34) des cellules (14) opposées au fond (32) selon la première direction transversale (T1).

10. Procédé selon la revendication 2, dans lequel le premier déplacement relatif (D1) est réalisé selon une deuxième direction transversale (T2) perpendiculaire à la première direction transversale (T1) et la direction longitudinale (L), l'élément de boîtier (20) comprenant des parois latérales (30) entourant l'ensemble (12) dans la deuxième position autour de la deuxième direction transversale (T2).

11. Module (10) pour batterie électrique susceptible d'être obtenu par un procédé tel que décrit par l'une quelconque des revendications 1 à 10, le module (10) comprenant :
- un ensemble (12) comprenant une pluralité de cellules (14) électrochimiques et de séparateurs (15), les cellules (14) et les séparateurs (15) étant successifs selon la direction longitudinale (L), l'ensemble (12) ayant une face avant (16) et une face arrière (18) opposées l'une à l'autre longitudinalement,
- un élément de boîtier (20) définissant un logement (22), au moins une partie de l'ensemble (12) s'étendant longitudinalement dans le logement (22), l'ensemble (12) étant dans la deuxième configuration contractée, la face avant (16) et la face arrière (18) recevant des efforts de compression (F) longitudinaux de la part de l'élément de boîtier (20), et
- une pluralité de connecteurs électriques (24) connectant électriquement au moins certaines des cellules (14) entre elles.
